# EUROPEAN PATENT APPLICATION

(11) **EP 2 887 516 A1**
(43) Date of publication of application: **24.06.2015**
(21) Application number: 14177050.3
(22) Date of filing: 15.07.2014
(51) Int. Cl.: H02M 1/10

(54) **Universal voltage regulator and method of bypassing a voltage regulation unit in a voltage regulation apparatus**

(30) Priority: 23.12.2013 KR 20130161054
(71) Applicant: Dongbu Daewoo Electronics Corporation, Seoul 100-769 (KR)
(72) Inventor: Jung, Hee Sok, 100-769 Seoul (KR)
(74) Representative: Rau, Schneck & Hübner Patentanwälte Rechtsanwälte PartGmbB

(57) **Abstract**

A voltage regulation apparatus includes a voltage regulation unit configured to convert an electrical power into an output voltage. A switching unit is configured to allow the input electrical power to pass through the voltage regulation unit, and is also configured to cause the input electrical power to bypass the voltage regulation unit.

## Description

### Cross-Reference to Related Application

This application is based on and claims priority to Korean Patent Application No. 10-2013-0161054, filed on December 23, 2013, the disclosure of which is incorporated herein in its entirety by reference.

### Field of the Invention

Embodiments according to the present invention relate to a voltage regulation apparatus and a method of bypassing a voltage regulation unit in a voltage regulation apparatus.

### Background

In order to use electronic products in different countries, the product should be compatible with the standard voltage and frequency used in each country (for example, the United States uses a standard voltage and frequency of 120V/60Hz, Japan uses a standard voltage and frequency of 100V/50Hz, etc.). As a result, electrical components adapted to the various electrical power standards have been produced.

Electronic products typically include an automatic voltage regulator. An automatic voltage regulator is an electronic device that converts an input voltage to an output voltage that is constant regardless of the level of the input voltage. An electronic product that includes such a voltage regulator has to meet only a single voltage/frequency specification (for example, 220V/60Hz) during product development, which is beneficial in terms of development cost, development period, material cost of the product, etc.

Prices for automatic voltage regulators can vary depending on the sizes of the loads in the electronic product; a "higher capacity" automatic voltage regulator that can accommodate larger loads (higher power consumption loads) is typically higher-priced. For example, the manufacturing cost may be higher for a higher capacity automatic voltage regulator that can be installed in an electronic product that includes a high power consumption load such as a heater, a motor, or the like.

This may be an obstacle to installing a higher capacity automatic voltage regulator in different types of electronic products regardless of whether those products include larger loads, because doing so can make the products less competitive based on price.

### Summary of the Invention

Embodiments according to the present invention provide a voltage regulation apparatus that can be used with different electronic products regardless of the sizes of (e.g., the amount of power consumed by) the loads of the electronic products. This is achieved by selectively bypassing a path to the voltage regulation apparatus when powering a high power consumption load.

In one or more embodiments according to the present invention, a voltage regulation apparatus includes a voltage regulation unit configured to convert an input electrical power into an output voltage. A switching unit is configured to allow the input electrical power to pass through the voltage regulation unit, or to bypass the voltage regulation unit.

In one or more embodiments, the switching unit is configured to switch on so that the input electrical power bypasses the voltage regulation unit.

In one or more embodiments, the voltage regulation unit is coupled to one or more loads.

In one or more embodiments, the switching unit is configured to switch off so that the input electrical power passes through the voltage regulation unit (e.g. only through the voltage regulation unit). In a further embodiment, the input electrical power also passes through the voltage regulation unit.

In one or more other embodiments, a method includes: driving a voltage regulation apparatus in an electronic product, where the voltage regulation apparatus includes a voltage regulation unit; and switching a path of input electrical power such that the input electrical power either bypasses the voltage regulation unit or does not bypass the voltage regulation unit.

In one or more embodiments, the operation of switching the path includes performing a switching-off operation so that the input electrical power does not bypass the voltage regulation unit.

In one or more embodiments, the operation of switching the path includes performing a switching-on operation so that the input electrical power bypasses the voltage regulation unit. A further embodiment includes providing the input electrical power to the voltage regulation unit when the path is switched on.

Accordingly, in embodiments according to the present invention, it is possible to utilize the voltage regulation apparatus in various electronic products regardless of the power consumed by the loads of those electronic products. This is accomplished by bypassing the voltage regulation unit when powering high power consumption loads. Accordingly, the versatility of the disclosed voltage regulation apparatus is increased and its manufacturing cost is reduced, thereby increasing the market competitiveness of electronic products that include the disclosed voltage regulation apparatus, especially electronic products that are exported and used in countries that have different voltage and frequency standards.

### Brief Description of the Drawings

The above and other objects and features of the present invention will become apparent from the following description of the embodiments given in conjunction with the accompanying drawings, in which:
Fig. 1A is a block diagram of an electronic product in which embodiments of a voltage regulation apparatus according to the present invention may be implemented;
Fig. 1B is a block diagram of a voltage regulation apparatus in an embodiment according to the present invention;
Fig. 2 is a block diagram of a voltage regulation unit in an embodiment according to the present invention; and
Fig. 3 is a flowchart of a method for bypassing a voltage regulation unit in a voltage regulation apparatus in an embodiment according to the present invention.

### Detailed Description of the Embodiments

The advantages and features of exemplary embodiments according to the present invention and methods of accomplishing them will be clearly understood from the following description of the embodiments taken in conjunction with the accompanying drawings. However, the present invention is not limited to those embodiments and may be implemented in various forms. It should be noted that the embodiments are provided to make a full disclosure and also to allow those skilled in the art to know the full scope of the present invention. However, the present invention is to be construed according to the scope of the appended claims. Similar reference numerals refer to the same or similar elements throughout the drawings.

In the following description, well-known functions and/or constitutions will not be described in detail if they may unnecessarily obscure the embodiments of the invention. Further, the terminologies to be described below are defined in consideration of the functions of the invention and may vary depending on a user's or operator's intention or practice. Accordingly, the definition may be based on the content throughout the specification.

Hereinafter, embodiments according to the present invention will be described in detail with reference to the accompanying drawings.

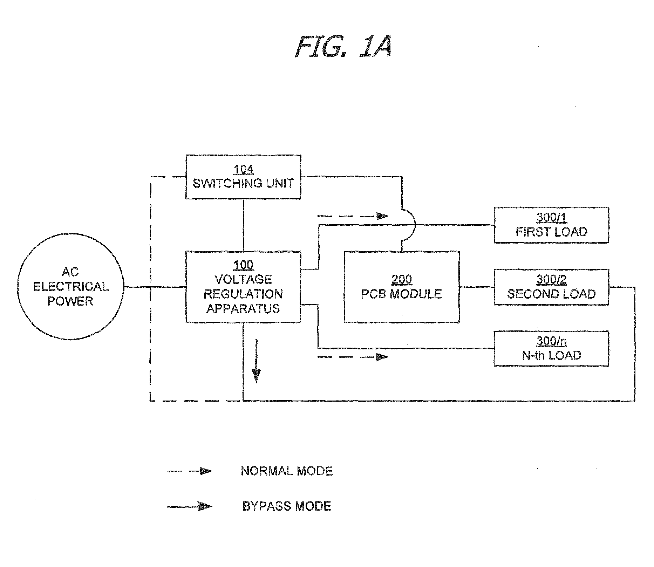

Fig. 1A is a block diagram of an electronic product in which embodiments of a voltage regulation apparatus according to the present invention may be implemented. In Fig. 1A, the electronic product includes a voltage regulation apparatus 100 that is coupled to a printed circuit board (PCB) 200 and a plurality of loads 300/1 to 300/n.

The voltage regulation apparatus 100 can convert electrical power that is supplied to the electronic product (for example, AC [alternating current] power) into a constant output voltage. The voltage regulation apparatus 100 can convert each of the various standard voltages and/or power supplies used in different countries into a single rated voltage.

In one or more embodiments according to the present invention, the voltage regulation apparatus 100 is configured to enable a voltage regulation function and to regulate the voltage of the input electrical power. The voltage regulation apparatus 100 is also configured to bypass the voltage regulation function. For example, in a normal mode (also referred to herein as the "first mode"), the voltage regulation apparatus 100 may select a path to a smaller load that consumes a relatively low amount of power, e.g., a first load 300/1, as illustrated by a dashed line arrow in Fig. 1A; and, in a bypass mode (also referred to herein as the "second mode"), the voltage regulation apparatus 100 may select a path to a larger load that consumes a relatively high amount of power consumption, e.g., a second load 300/2, as illustrated by a solid line arrow in Fig. 1A.

The PCB 200 controls, for example, the second load 300/2 when the voltage regulation apparatus 100 selects a power path in the bypass mode. Thus, the PCB 200 may comprise: a controller or microcontroller, a programmable logic device, or similar control logic/circuit; a memory that stores the programming and/or code; one or more discrete logic devices (such as a buffer, inverter, resistor, capacitor, latch, etc.); etc. Each of these components are generally mounted on a printed circuit board.

The loads 300/1 to 300/n are components, for example, that are installed in or mounted on the electronic product and that consume electrical power. Some of these loads (e.g., the load 300/2) may be high power consumption loads, for example, a heater, a motor, a pump, a compressor, a magnetron, or the like, that consume a large load (e.g., between 2.5 KW and 3 KW of power). Other loads (e.g., the loads 300/1 and 300/n) may comprise low power consumption loads, such as switches, valves, light-emitting diodes, certain control circuitry, displays, etc.

In one or more embodiments, electrical power from the AC electrical power source goes to the voltage regulation apparatus 100, and from the voltage regulation apparatus 100 to (i) the switching unit 104 and the first load 300/1 and/or the N-th load 300/n in the normal mode, and (ii) the second load 300/2 in the bypass mode, as shown by the corresponding solid lines in Fig. 1A.

In one or more other embodiments, in the bypass mode, electrical power from the AC electrical power source goes directly to the switching unit 104 and the second load 300/2 as shown by the dashed lines in Fig. 1A. In these other embodiment(s), in the normal mode, electrical power from the AC electrical power source goes to the voltage regulation apparatus 100, and from the voltage regulation apparatus 100 to the first load 300/1 and/or the N-th load 300/n.

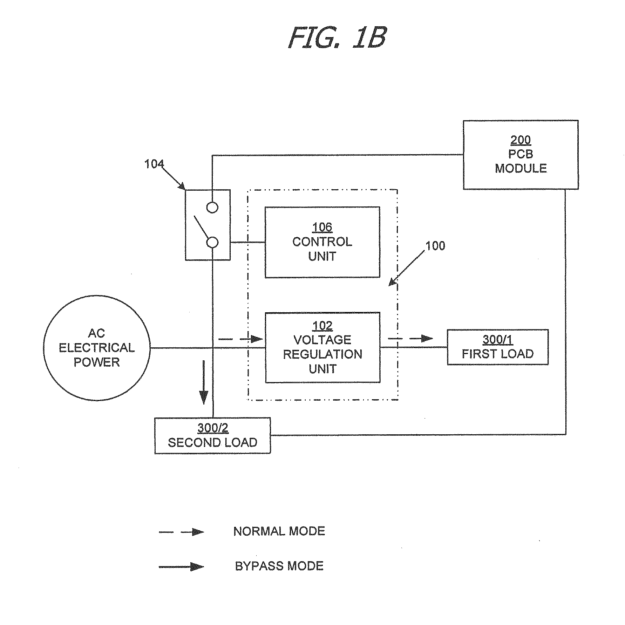

Fig. 1B is a block diagram of the voltage regulation apparatus 100 illustrating operation in the normal and bypass modes in an embodiment according to the present invention. The example of Fig. 1B corresponds to the embodiments represented by the dashed lines in Fig. 1A.

In the example of Fig. 1B, the voltage regulation apparatus 100 includes a voltage regulation unit 102, a switching unit 104, and a control unit 106.

The voltage regulation unit 102 is configured to convert input AC electrical power into a constant output voltage.

The switching unit 104 performs a switching function, to direct the input AC electrical power as along (only) the path illustrated by the dashed line arrow in the normal mode, or along the path illustrated by the solid line arrow in the bypass mode. For example, a power path for the normal mode (the dashed line arrow) is selected when the switching unit 104 is switched-off (which may be referred to herein as the "second state"), and a power path for the bypass mode (the solid line arrow) is selected when the switching unit 104 is switched-on (which may be referred to herein as the "first state").

As described above, in the normal mode, the input electrical power passes to/through the voltage regulation unit 102 and is regulated (e.g., filtered, converted to DC [direct current] power, converted to a different DC power and/or converted back to the same or a different AC power, etc.) before going to a load (e.g., the first load 300/1). However, in the bypass mode, the input electrical power bypasses the voltage regulation unit 102 and goes directly to a load (e.g., the second load 300/2).

The control unit 106 controls the switching unit 104 depending on, for example, a signal based on a user input (e.g., for DC power, such as 12V). For example, the control unit 106 selectively switches on the switching unit 104 or switches it off.

Although, in the example of Fig. 1B, the control unit 106 is used to control the switching unit 104 in the voltage regulation apparatus 100, it is not necessarily included in the voltage regulation apparatus 100. In the absence of a control unit, a user may supply an input signal directly to the switching unit 104. For example, the switching unit 104 may incorporate one or more kinds of relays, such as contact relays, thermal relays, pressure relays, optical relays, or the like.

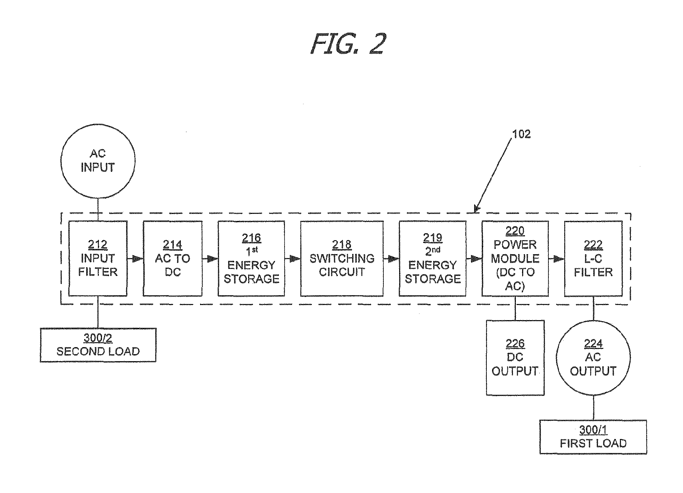

Fig. 2 is a block diagram of a voltage regulation unit 102 in an embodiment according to the present invention. Because the voltage regulation unit 102 can accept any standard AC input, it may be considered to be a "universal" voltage regulator. In the Fig. 2 embodiment, the voltage regulation unit 102 includes an input filter 212, an AC-to-DC converter 214 (e.g., a rectifier), a first energy storage element 216 (e.g., one or more inductors and/or capacitors), a switching circuit 218, a second energy storage element 219 (e.g., a transformer), a power module 220 that converts AC voltage to DC voltage, and an L-C (inductor-capacitor) filter 222. The voltage regulation unit 102 may further include a DC-DC step-up and/or step-down converter (which may also be part of a component of the voltage regulation unit, such as the switching circuit 218).

In the example of Fig. 2, a larger load (e.g., the load 300/2) is coupled to the voltage regulation unit 102 (specifically, to the input filter 212). In that sense, the example of Fig. 2 corresponds to the embodiments represented by the solid lines in Fig. 1A. A larger load (e.g., the load 300/2) receives a non-regulated voltage in the bypass mode as previously described herein.

In the normal mode, regulated voltage (AC output 224) is output from the L-C filter to a smaller load (e.g., the load 300/1).

In an embodiment, DC power (DC output 226) is output from the power module 220. The DC output 226 may have a plurality of outputs, each having one of a plurality of values. For example, the DC powers at DC output 226 may be 1.8V, 3.3V, 5V, 9V, 12V, combinations and/or subsets thereof, etc.

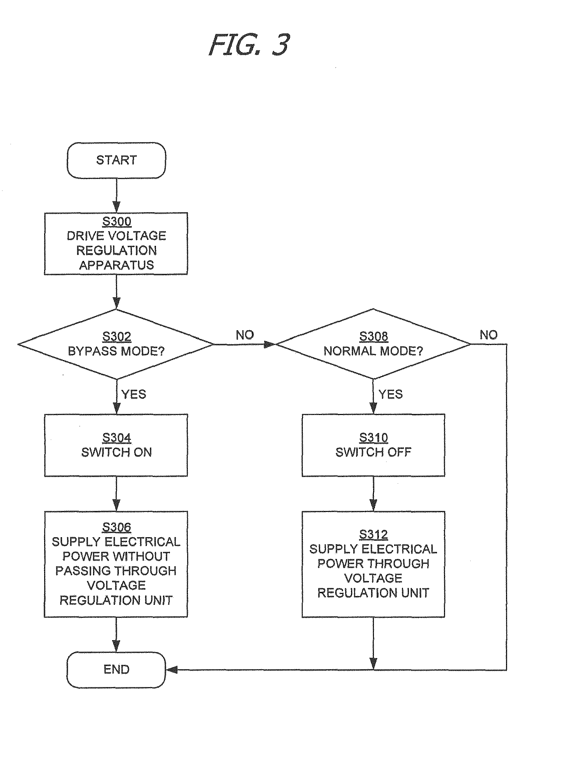

Hereinafter, a method of bypassing the voltage regulation apparatus 100 will be described with reference to the flowchart of Fig. 3.

In the embodiment of Fig. 3, when AC electrical power is supplied and the voltage regulation apparatus 100 begins to operate (block S300), the control unit 106 (Fig. 1B) receives an input signal as described above, and based on the input signal determines whether or not to enter into the bypass mode (block S302). For example, in response to the input signal, the control unit 106 can determine whether or not to switch off the switching unit 104.

In the example of Fig. 3, when it is determined that the bypass mode is to be entered, then the control unit 106 issues a control/command signal to switch the switching unit 104 one way (e.g., on, which may be referred to herein as a switching-on operation). In response, the switching unit 104 is switched on (block S304).

In this example, if the switching unit 104 is switched on, then the AC electrical power is directly supplied to a high power consumption load, e.g., the second load 300/2, without passing through the voltage regulation unit 102 (block S306).

On the other hand, when it is determined that the normal mode is to be entered (e.g., only the normal mode is to be entered) (block S308), then the control unit 106 sends a control/command signal to switch the switching unit 104 another way (e.g., off, which may be referred to herein as a switching-off operation). In response, the switching unit 104 is switched off (block S310).

In this example, if the switching unit 104 is switched off, then the voltage regulation unit 102 converts (regulates) the AC electrical power into an output voltage that has a constant level, and the converted (regulated) output voltage is supplied to a low power consumption load, e.g., the first load 300/1. In further embodiments, the voltage regulation unit 102 is always "on" (e.g., always regulating the input electrical power for use by low power loads).

Alternatively, the switching unit 104 can be switched off in the normal mode and switched on in the bypass mode.

In an embodiment according to the present invention, the control unit 106 does not issue the command signals to switch the switching unit 104 on and off. Instead, the switching unit 104 is configured to directly receive an input signal from a user, and is switched on/off in accordance with the input signal.

In summary, in embodiments according to the present invention, a voltage regulation apparatus can be used with different electronic products regardless of the amounts of power consumed by the loads of the electronic product. This is achieved by providing input electrical power to a low power consumption load through the voltage regulation apparatus, and by bypassing the voltage regulation apparatus and providing the input electrical power directly to a high power consumption load.

While the invention has been shown and described with respect to the embodiments, the present invention is not limited thereto. It will be understood by those skilled in the art that various changes and modifications may be made without departing from the scope of the invention as defined in the following claims.

## Claims

1. An apparatus comprising:
a voltage regulation unit configured to convert an input electrical power into an output voltage; and
a switching unit coupled to the voltage regulation unit and configured to allow the input electrical power to pass through the voltage regulation unit, the switching unit also configured to cause the input electrical power to bypass the voltage regulation unit.

2. The apparatus of claim 1, wherein, in a first state, the switching unit is configured to cause the input electrical power to bypass the voltage regulation unit.

3. The apparatus of claim 2, wherein the voltage regulation unit provides a low power to a first load.

4. The apparatus of claim 2, wherein the switching unit is configured to cause the input electrical power to pass through the voltage regulation unit.

5. The apparatus of claim 1, further comprising a control unit configured to control the switching unit.

6. The apparatus of claim 1, further comprising a printed circuit board coupled to the switching unit.

7. A method comprising:
receiving an input electrical power into an electronic product; and
switching a path of the input electrical power such that the input electrical power passes through a voltage regulation unit in a first mode and bypasses the voltage regulation unit in a second mode.

8. The method of claim 7, wherein switching the path comprises performing a switching-on operation so that the input electrical power bypasses the voltage regulation unit.

9. The method of claim 7, wherein switching the path comprises performing a switching-off operation, and the input electrical power passes through the voltage regulation unit.

10. The method of claim 7, further comprising:
determining whether to enter into the first mode or into the second mode; and
when operating in the first mode, directing the input electrical power to the voltage regulation unit, the voltage regulation unit then outputting a regulated voltage to a first load; and when operating in the second mode, directing the input electrical power directly to a second load.

11. An electronic product, comprising:
a voltage regulation unit;
a switching unit, responsive to a control signal, configured to selectively bypass the voltage regulation unit along a first path and a second path; and
a first load and a second load, wherein the second load consumes more power than the first load;
wherein when the voltage regulation unit is not bypassed, an input electrical power goes to the voltage regulation unit, which outputs a regulated voltage to the first load; and when the voltage regulation unit is bypassed, the input electrical power goes directly to the second load.

12. The electronic product of claim 11, wherein the switching unit bypasses the voltage regulation unit in a first state.

13. The electronic product of claim 12, wherein the input electrical power goes to the voltage regulation unit when the switching unit is in a second state.

14. The electronic product of claim 11, further comprising a control unit configured to control the switching unit.

15. The electronic product of claim 11, further comprising a printed circuit board coupled to the switching unit.
